# EUROPEAN PATENT APPLICATION

(11) **EP 4 826 645 A1**
(43) Date of publication of application: **21.10.2026**
(21) Application number: 24905512.0
(22) Date of filing: 19.07.2024
(51) Int. Cl.: G06T 7/00

(54) **ELECTRODE SHEET BURR DETECTION METHOD AND APPARATUS, ELECTRONIC DEVICE, AND STORAGE MEDIUM**

(30) Priority: 19.12.2023 CN 202311753441
(71) Applicant: Contemporary Amperex Technology Co., Limited, Ningde, Fujian 352100 (CN)
(72) Inventor: HUANG, Boxiong, Ningde, Fujian 352100 (CN); HU, Jie, Ningde, Fujian 352100 (CN); JIANG, Guannan, Ningde, Fujian 352100 (CN)
(74) Representative: Kraus & Lederer PartGmbB
(86) International application number: PCT/CN2024/106333
(87) International publication number: WO 2025/130014

(57) **Abstract**

Disclosed in the present application are a method and an apparatus (900) for detecting burrs on an electrode sheet, an electronic device, and a storage medium. In the present application, after an electrode sheet end face image after a battery electrode sheet is slit is obtained, a molten region is segmented from the electrode sheet end face image to obtain a molten region image; and burrs in the molten region are identified based on a molten region height value corresponding to the molten region in the molten region image and a preset burr height threshold. By means of the method described above, the present application can prevent the problem of inaccurate burr identification caused by high similarity between features of the molten region and features of an active material, thereby improving burr identification accuracy.

## Description

### CROSS-REFERENCE TO RELATED APPLICATIONS

The present application claims priority to Chinese Patent Application No. 202311753441.4, filed on December 19, 2023 and entitled "METHOD AND APPARATUS FOR DETECTING BURRS ON ELECTRODE SHEET, ELECTRONIC DEVICE, AND STORAGE MEDIUM", which is incorporated herein by reference in its entirety.

### TECHNICAL FIELD

The present application relates to the field of battery technologies, and in particular, to a method and an apparatus for detecting burrs on an electrode sheet, an electronic device, and a storage medium.

### BACKGROUND

Laser die cutting is widely used in various industrial manufacturing scenarios of lithium batteries. Laser die cutting of electrode sheets of lithium batteries ensures that the electrode sheets after die cutting achieves the geometry required for design. However, during the laser die cutting process of electrode sheets, fluctuations in laser power or abnormalities in incoming materials cause burr defects on the electrode sheets, which in turn affects the quality of lithium batteries. Therefore, burr detection of electrode sheets is of great significance.

However, burr detection methods in the related art suffer from low detection accuracy when identifying burrs on electrode sheet end faces.

### SUMMARY

The present application provides a method and an apparatus for detecting burrs on an electrode sheet, an electronic device, and a storage medium, which prevents the problem of inaccurate burr identification caused by high similarity between features of the molten region and features of an active material, thereby improving the accuracy of burr identification.

According to a first aspect, the present application provides a method for detecting burrs on an electrode sheet. The method includes: obtaining an electrode sheet end face image after a battery electrode sheet is slit; segmenting a molten region from the electrode sheet end face image to obtain a molten region image; and identifying burrs in the molten region based on a molten region height value corresponding to the molten region in the molten region image and a preset burr height threshold.

In this embodiment of the present application, the molten region is segmented from the electrode sheet end face image to automatically identify the molten region, thereby avoiding the problem of low identification accuracy of the molten region associated with manual visual identification, so that the identification accuracy of the molten region is improved and the identification efficiency of the molten region is improved. Further, after the molten region is identified, the burrs in the molten region are identified by comparing the molten region height value of the molten region with the preset burr height threshold, thereby avoiding the problem of low efficiency and accuracy of burr annotation caused by manual burr annotation and improving the accuracy and detection efficiency of burr detection.

In some embodiments, the obtaining an electrode sheet end face image after a battery electrode sheet is slit includes: obtaining an initial electrode sheet end face image including at least an electrode sheet end face; and cropping the initial electrode sheet end face image based on a position and/or a proportion of the electrode sheet end face in the initial electrode sheet end face image to obtain the electrode sheet end face image.

The electrode sheet end face image is cropped to improve the identification accuracy of the molten region in the electrode sheet end face image, thereby improving the detection accuracy of burr detection.

In some embodiments, the segmenting a molten region from the electrode sheet end face image to obtain a molten region image includes: identifying the molten region from the electrode sheet end face image using a region identification model; and segmenting the molten region from the electrode sheet end face image to obtain the molten region image, where the molten region image is a binary image, and the binary image includes the molten region and a background region.

The automatic identification of the molten region is implemented using the region identification model, to avoid the problem of low identification accuracy in manual identification of the molten region and improve the identification accuracy and efficiency of the molten region, thereby improving the accuracy and efficiency of burr detection. In addition, the molten region image is an image including the molten region and the background region, and the molten region and the background region have a high degree of distinction in the molten region image. Therefore, burr identification based on the molten region image avoids the problem of inaccurate burr identification caused by the high similarity between features of the molten region and features of an active material, thereby improving the accuracy of burr identification.

In some embodiments, the identifying burrs in the molten region based on a molten region height value corresponding to the molten region in the molten region image and a preset burr height threshold includes: sampling the molten region in the molten region image to obtain a plurality of sampling points; and identifying burrs in the molten region based on molten region height values corresponding to the sampling points and the preset burr height threshold.

The burrs in the molten region are identified by comparing the molten region height value of the molten region with the preset burr height threshold, thereby avoiding the problem of low efficiency and accuracy of burr annotation caused by manual burr annotation and improving the accuracy and detection efficiency of burr detection.

In some embodiments, the sampling the molten region in the molten region image to obtain a plurality of sampling points includes: performing connected component processing on the molten region image to obtain a target molten region image; and sampling the molten region in the target molten region image in a first direction to obtain the plurality of sampling points, where the first direction is used for representing an extension direction of the molten region in an electrode sheet end face.

The connected component processing is performed on the molten region image to ensure the consistency of image regions in the molten region image and reduce the risk of discontinuity within the molten region in the molten region image during burr defect identification, thereby improving the accuracy of burr defect detection. Multi-point sampling in a transverse direction of the molten region reduces the randomness of burr defect detection while lowering the risk of missed burr detection based on ensuring a reasonable burr detection time.

In some embodiments, the identifying burrs in the molten region based on molten region height values corresponding to the sampling points and the preset burr height threshold includes: obtaining molten region height values corresponding to the sampling points in a second direction to obtain the molten region height values of the sampling points, where the second direction and the first direction are perpendicular to each other; comparing the molten region height values of the plurality of sampling points to obtain a maximum height value; and when the maximum height value is greater than the preset burr height threshold, determining that a burr is present in the molten region.

The maximum height value of the molten region height values is compared with the preset burr height threshold to determine whether a burr is present in the molten region, thereby improving the accuracy of burr defect detection. In addition, only the maximum height value is compared with the preset burr height threshold, making it unnecessary to compare the molten region height values of all sampling points with the preset burr height threshold, so that the number of comparisons is reduced to improve comparison efficiency, thereby improving the efficiency of burr detection.

In some embodiments, after the determining that a burr is present in the molten region, the method further includes: comparing the molten region height values corresponding to the sampling points with the preset burr height threshold to obtain comparison results; determining a target sampling point from the plurality of sampling points based on the comparison results, where the target sampling point is a sampling point whose molten region height value is greater than the preset burr height threshold; and determining that a position of the target sampling point in the molten region is a position of the burr in the molten region.

After it is detected that a burr defect is present in the molten region, the specific position of the burr in the molten region is further detected, so that the efficiency and accuracy of burr detection are improved. Based on identifying whether a burr defect is present in the molten region, when the burr defect is identified, a specific defect position is determined, to facilitate subsequent analysis of the cause of the burr defect, so that laser die cutting equipment or the manufacturing process of the electrode sheet is improved to improve the production quality of the electrode sheet, thereby improving the production quality of the battery.

In some embodiments, after the comparing the molten region height values of the plurality of sampling points to obtain a maximum height value, the method further includes: when the target sampling point does not exist in the plurality of sampling points, calculating an average value of the molten region height values of the plurality of sampling points to obtain an average height value of the molten region; and determining, based on the average height value of the molten region and a preset molten region height range, whether quality of the battery electrode sheet meets a target requirement.

In the absence of burr defects in the molten region, a product compliance inspection is further performed on the molten region to improve the quality of the battery electrode sheet, thereby improving the production quality of the battery.

In some embodiments, after the obtaining molten region height values corresponding to the sampling points in a second direction to obtain the molten region height values of the sampling points, the method further includes: statistically analyzing the molten region height values corresponding to the plurality of sampling points, and determining an abnormal height range corresponding to abnormal sampling points; identifying the abnormal sampling points from the plurality of sampling points based on the abnormal height range, where molten region height values of the abnormal sampling points are within the abnormal height range; and filtering out the abnormal sampling points from the plurality of sampling points to obtain a plurality of filtered sampling points.

The abnormal sampling points in the molten region image are identified and filtered out to avoid the impact of the abnormal sampling points on burr detection, thereby improving the accuracy of burr detection.

In some embodiments, the region identification model includes at least a U-Net model.

The U-Net model is used to identify the molten region in the electrode sheet end face image, thereby reducing the costs of identifying the molten region.

According to a second aspect, the present application further provides an apparatus for detecting burrs on an electrode sheet. The apparatus includes: an image obtaining module, configured to obtain an electrode sheet end face image after a battery electrode sheet is slit; a molten region identification module, configured to segment a molten region from the electrode sheet end face image to obtain a molten region image; and a burr identification module, configured to identify burrs in the molten region based on a molten region height value corresponding to the molten region in the molten region image and a preset burr height threshold.

According to a third aspect, the present application further provides an electronic device. The electronic device includes a processor and a memory having computer program instructions stored therein. The processor, when executing the computer program instructions, implements the method for detecting burrs on an electrode sheet according to the first aspect.

According to a fourth aspect, the present application further provides a readable storage medium. The readable storage medium having computer program instructions stored therein. The computer program instructions, when executed by a processor, implement the method for detecting burrs on an electrode sheet according to the first aspect.

The above description only refers to an overview of the technical solutions of the present application. In order to understand the technical means of the present application more clearly such that it can be implemented according to the content of the specification, and to make the above-mentioned and other purposes, features, and advantages of the present application more apparent, specific embodiments of the present application are listed below.

### BRIEF DESCRIPTION OF THE DRAWINGS

In the following, the features, advantages, and technical effects of exemplary embodiments of the present application are described with reference to the accompanying drawings.
FIG. 1 is a schematic diagram of an electrode sheet end face in the related art;
FIG. 2 is a schematic diagram of an electrode sheet end face in the related art;
FIG. 3 is a schematic diagram of an application environment of a method for detecting burrs on an electrode sheet according to an embodiment of the present application;
FIG. 4 is a flowchart of a method for detecting burrs on an electrode sheet according to an embodiment of the present application;
FIG. 5 is a schematic diagram of a molten region image according to an embodiment of the present application;
FIG. 6 is a schematic structural diagram of a U-Net model according to an embodiment of the present application;
FIG. 7 is a schematic diagram of a sampled molten region image according to an embodiment of the present application;
FIG. 8 is a schematic diagram of a sampled molten region image with abnormal sampling points filtered out according to an embodiment of the present application;
FIG. 9 is a schematic diagram of an apparatus for detecting burrs on an electrode sheet according to another embodiment of the present application; and
FIG. 10 is a schematic diagram of a hardware structure of an electronic device according to another embodiment of the present application.

In the drawings, the components are not drawn to actual scale.

### DETAILED DESCRIPTION

To make the objectives, technical solutions, and advantages of embodiments of the present application clearer, the following clearly and completely describes the technical solutions in embodiments of the present application with reference to the accompanying drawings in embodiments of the present application. It is clear that the described embodiments are merely some rather than all of embodiments of the present application. All other embodiments obtained by persons of ordinary skill in the art based on embodiments of the present application without creative efforts shall fall within the scope of protection of the present application.

Unless defined otherwise, all technical and scientific terms used herein have the same meaning as commonly understood by those skilled in the technical filed to which the present application belongs. The terminology used herein is for the purpose of describing particular embodiments only and is not intended to limit the present application. The terms "comprising" and "having" and any variations thereof in the description and claims of the present application and the above description of the accompanying drawings are intended to cover non-exclusive inclusions.

In the description of the embodiments of the present application, the technical terms "first", "second", and the like are only used to distinguish different objects, and should not be understood as indicating or implying relative importance or implying the number, specific order or primary and secondary relationship of indicated technical features. In the description of the embodiments of the present application, "a plurality of" means two or more, unless otherwise expressly and specifically defined.

Reference to "an embodiment" in the embodiments of the present application means that a particular feature, structure or characteristic described in combination with the embodiment may be included in at least one embodiment of the present application. The phrase shown in various locations in the specification may not necessarily refer to a same embodiment, and is not an independent or alternative embodiment exclusive from another embodiment. Persons skilled in the art explicitly or implicitly understand that embodiments described in the embodiments of the present application may be combined with other embodiments.

In the description of the embodiments of the present application, the term "and/or" is merely an association to describe the associated objects. It can mean that there are three kinds of relationships, such as A and/or B, which means that A exists alone, A and B exist at the same time, and B exists alone. In addition, in this specification, the character "/" usually indicates an "or" relationship between the associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are directions or positional relationships based on the accompanying drawings, and are only for the convenience of describing the embodiments of the present application and simplifying the description, rather than indicating or implying that the involved device or element should have a specific orientation or should be configured or operated in the specific orientation, therefore, they cannot be understood as limiting the embodiments of the present application.

In the description of the embodiments of the present application, unless otherwise expressly specified and defined, the technical terms "installed", "connected to", "connected with", "fixed", or the like should be interpreted in a broad sense. For example, a connection may refer to a fixed connection, a disassembly connection or an integral connection; or may refer to a mechanical connection or an electrical connector; or may refer to a direct connection or an indirect connection through an intermediate medium; or may refer to an internal communication between the two elements or the interaction relationship between the two elements. For those of ordinary skill in the art, the specific meanings of the above terms in the embodiments of the present application may be interpreted according to specific situations.

Laser die cutting is widely used in various industrial manufacturing scenarios of lithium batteries. Laser die cutting of electrode sheets of lithium batteries allows the battery electrode sheets after die cutting to obtain the geometry required for battery design. However, during the laser die cutting process, possible fluctuations in laser power or abnormalities in incoming materials cause burr defects on the electrode sheet end face after laser die cutting, which in turn affects the quality of lithium batteries.

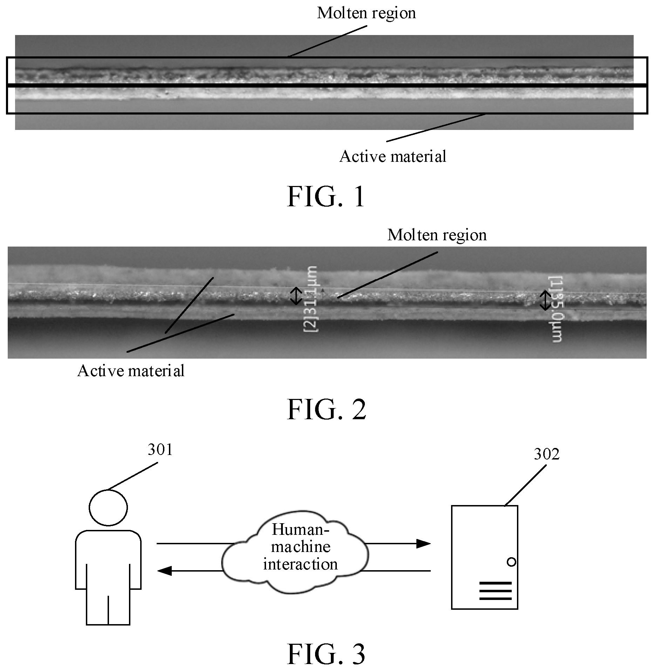

Conventional burr detection solutions generally exhibit a high detection rate for protruding planar burrs. For example, pulsed cameras and grayscale cameras can be used to capture images, and line fitting techniques can be employed to determine and measure burrs. However, the foregoing method is only applicable to the detection of burrs on thin films and cannot be used for the detection of burrs on the electrode sheet end face of a multi-layer structure. In addition, end face burr scenarios are complex, with most requiring manual visual inspection under a microscope. In addition, the characteristics of the molten region in which a burr is located exhibit high similarity to those of active materials above and below the molten region. As shown in the diagram of the electrode sheet end face in FIG. 1, the molten region has high similarity to an active material region, making manual identification of the molten region prone to misidentification. In the related art, a manual annotation method is typically used to annotate burrs on the electrode sheet end face. For example, in the electrode sheet end face image shown in FIG. 2, a detection operator annotates burr heights at a position [1] and a position [2]. The burr height at the position [1] is 35.0 µm, and the burr height at the position [2] is 31.1 µm. The above manual burr annotation method relies on human experience, resulting in unstable annotation and low accuracy of burr detection. In addition, the manual burr detection solution requires a large amount of labor, resulting in low efficiency and increased costs of burr detection.

In view of the deficiencies in the related art, the present application provides a method for detecting burrs on an electrode sheet. The method employs a neural network model to identify a molten region in an electrode sheet end face to solve the problems of low identification accuracy and low identification efficiency caused by manual identification of the molten region in the related art, thereby improving the identification accuracy of the molten region and further improving the accuracy and detection efficiency of burr detection. After the molten region is accurately identified, multi-point sampling is performed on the molten region, and a molten region height value corresponding to each sampling point is detected to identify burr defects in the molten region. The process does not rely on human experience, thereby improving the accuracy and stability of burr annotation and reducing the labor consumption and detection costs of burr detection.

It should be noted that the method for detecting burrs on an electrode sheet provided in the present application is applied in the application environment shown in FIG. 3. In FIG. 3, a user 301 operates on a terminal device 302 through human-machine interaction. For example, the user 301 may input an end face image of a battery electrode sheet after laser die cutting on a display interface of the terminal device 302. The terminal device 302 adopts the solution provided in the embodiment of the present application to detect the acquired end face image to identify burr defects in the end face image. The terminal device 302 may be but is not limited to various personal computers, laptops, smartphones, and tablet computers. In this embodiment of the present application, the battery may be a lithium-ion battery, and the battery electrode may be an electrode of the lithium-ion battery.

In addition, it should be further noted that during actual application, the end face image after laser die cutting may alternatively be directly input from laser die cutting equipment into the terminal device 302 in FIG. 3. This manner simplifies the steps of manual operation and improve operating efficiency.

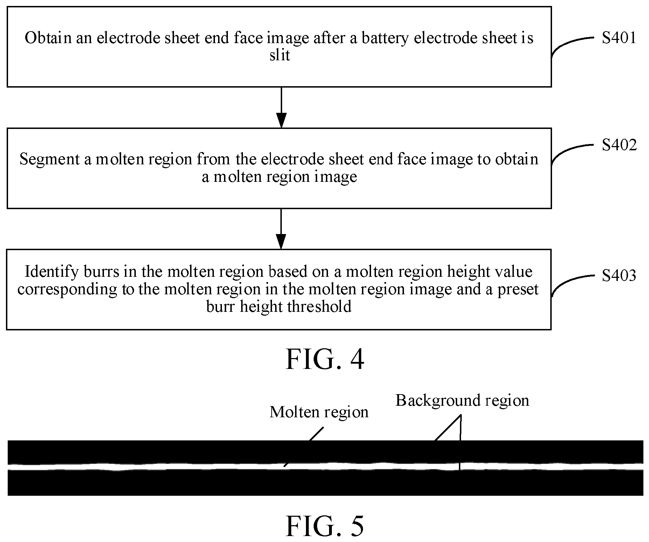

In an embodiment, FIG. 4 is a flowchart of a method for detecting burrs on an electrode sheet. The method may be applied to the terminal device 302 in FIG. 3. As shown in FIG. 4, the method may include the following step S401 to step S403.

Step S401: Obtain an electrode sheet end face image after a battery electrode sheet is slit.

In an example, laser die cutting equipment performs laser die cutting on the battery electrode sheet to obtain an electrode sheet end face. In addition, the laser die cutting equipment may photograph an image of the laser end face to obtain the electrode sheet end face image, and store the electrode sheet end face image in the terminal device. When the quality of the electrode sheet is to be detected, an detection operator may input the electrode sheet end face image of the electrode sheet to be detected into an application used by the terminal device to detect burr defects to process the electrode sheet end face image, thereby identifying burr defects in the electrode sheet end face.

In another example, laser die cutting equipment performs laser die cutting on the battery electrode sheet to obtain an electrode sheet end face. In addition, the laser die cutting equipment may photograph an image of the laser end face to obtain the electrode sheet end face image, and input the electrode sheet end face image in an application used by the terminal device to detect burr defects to process the electrode sheet end face image, thereby identifying burr defects in the electrode sheet end face.

Step S402: Segment a molten region from the electrode sheet end face image to obtain a molten region image.

In this embodiment of the present application, the terminal device may automatically identify the molten region in the electrode sheet end face image without manual identification, so that the identification efficiency of the molten region is improved, and the problem of low identification accuracy in manual identification is avoided.

In an example, the terminal device may segment the molten region image from the electrode sheet end face image in an image processing manner, or may identify the molten region image from the electrode sheet end face image in a neural network model manner.

Step S403: Identify burrs in the molten region based on a molten region height value corresponding to the molten region in the molten region image and a preset burr height threshold.

In step S403, the preset burr height threshold may be a height value determined by a tester based on actual experience, or may be an upper limit value of a molten region height range determined by the terminal device by collecting statistics on height values of molten regions without burr defects.

In an example, the terminal device may sample the molten region, compare a molten region height value corresponding to each sampling point with the burr height threshold, and when detecting that a sampling point whose molten region height value is greater than the burr height threshold exists, it may be determined that a burr is present on the electrode sheet end face.

In another example, the terminal device compares molten region height values of a plurality of sampling points, and compares a maximum molten region height value with the burr height threshold. If the maximum molten region height value is greater than the burr height threshold, it may be determined that a burr is present on the electrode sheet end face.

Based on the solution defined in step S401 to step S403, it may be learned that in this embodiment of the present application, the molten region is segmented from the electrode sheet end face image to automatically identify the molten region, thereby avoiding the problem of low identification accuracy of the molten region associated with manual visual identification, so that the identification accuracy of the molten region is improved and the identification efficiency of the molten region is improved. Further, after the molten region is identified, the burrs in the molten region are identified by comparing the molten region height value of the molten region with the preset burr height threshold, thereby avoiding the problem of low efficiency and accuracy of burr annotation caused by manual burr annotation and improving the accuracy and detection efficiency of burr detection.

In some embodiments of the present application, optionally, the obtaining an electrode sheet end face image after a battery electrode sheet is slit includes: obtaining an initial electrode sheet end face image including at least an electrode sheet end face; and cropping the initial electrode sheet end face image based on a position and/or a proportion of the electrode sheet end face in the initial electrode sheet end face image to obtain the electrode sheet end face image.

In the foregoing embodiment, the initial electrode sheet end face image may include content other than the battery electrode sheet, and the content reduces the accuracy of molten region identification. In addition, generally, the battery electrode sheet accounts for a small proportion in the initial electrode sheet end face image. Therefore, to improve the identification accuracy of the molten region, in this embodiment of the present application, before the molten region in the electrode sheet end face image is identified, first, the initial electrode sheet end face image is cropped based on the position and/or proportion of the electrode sheet end face in the initial electrode sheet end face image, to remove interference factors other than an active material in the electrode sheet end face image. In addition, the proportion of the electrode sheet end face in the image is increased to provide a basis for subsequent molten region identification and burr defect detection.

In some embodiments of the present application, the segmenting a molten region from the electrode sheet end face image to obtain a molten region image includes: identifying the molten region from the electrode sheet end face image using a region identification model; and segmenting a molten region from the electrode sheet end face image to obtain a molten region image; and
In the foregoing embodiment, the region identification model is a neural network model for identifying a molten region. For example, the region identification model may be a U-Net model. The molten region image is a binary image, and the binary image includes the molten region and a background region.

In this embodiment of the present application, the automatic identification of the molten region is implemented using the region identification model, to avoid the problem of low identification accuracy in manual identification of the molten region and improve the identification accuracy and efficiency of the molten region, thereby improving the accuracy and efficiency of burr detection.

It should be noted that, during actual application, there is usually a small quantity of products with burr defects, and it is relatively difficult to collect a large number of defective samples. In addition, excessive parameters of the neural network model cause overfitting. However, because the scale of the U-Net model is small, it is not necessary to use a large number of defective samples, and the U-Net model has a small number of parameters, so that an overfitting problem is avoided. Therefore, in this embodiment of the present application, the U-Net model is used to identify the molten region in the electrode sheet end face image, thereby reducing the costs of identifying the molten region.

In the foregoing embodiment, the molten region image is a binary image, i.e., a binary image including 0s and 1s. It is necessary to process a region with the value of 1 is an image region, and it is not necessary to process a region with the value of 0 is a masked image region. In this embodiment of the present application, 1 represents a molten region in the electrode sheet end face image, and 0 represents a background region in the electrode sheet end face image. For example, in the schematic diagram of the molten region image shown in FIG. 5, a black region represents a background region, and a white region represents a molten region.

It should be noted that the electrode sheet end face image is converted into a binary image (i.e., the molten region image), and then a burr defect in the molten region of the electrode sheet end face is identified based on the molten region image. The molten region image is a binary image, in other words, all information in the electrode sheet end face image is converted to 0s and 1s, so that interference of other information in the electrode sheet end face image with burr detection is avoided, and the accuracy of burr detection is improved. In addition, the molten region and the background region have a high degree of distinction in the molten region image. Therefore, burr identification based on the molten region image avoids the problem of inaccurate burr identification caused by the high similarity between features of the molten region and features of an active material, thereby improving the accuracy of burr identification.

In some embodiments of the present application, the region identification model includes at least a downsampling module, an upsampling module, a convolutional module, and a feature concatenation module, and the segmenting a molten region from the electrode sheet end face image to obtain a molten region image includes: downsampling the electrode sheet end face image a plurality of times using the downsampling module to obtain a downsampling feature map generated in each time of downsampling; performing convolution processing, using the convolutional module, on the downsampling feature map generated in each time of downsampling to obtain a convolutional feature map; performing upsampling and feature concatenation on the convolutional feature map using the upsampling module and the feature concatenation module respectively to obtain a molten region feature corresponding to the molten region in the electrode sheet end face image; identifying the molten region and the background region from the electrode sheet end face image based on the molten region feature; and binarizing the molten region and the background region in the electrode sheet end face image, and segmenting the molten region from the binarized electrode sheet end face image to obtain the molten region image.

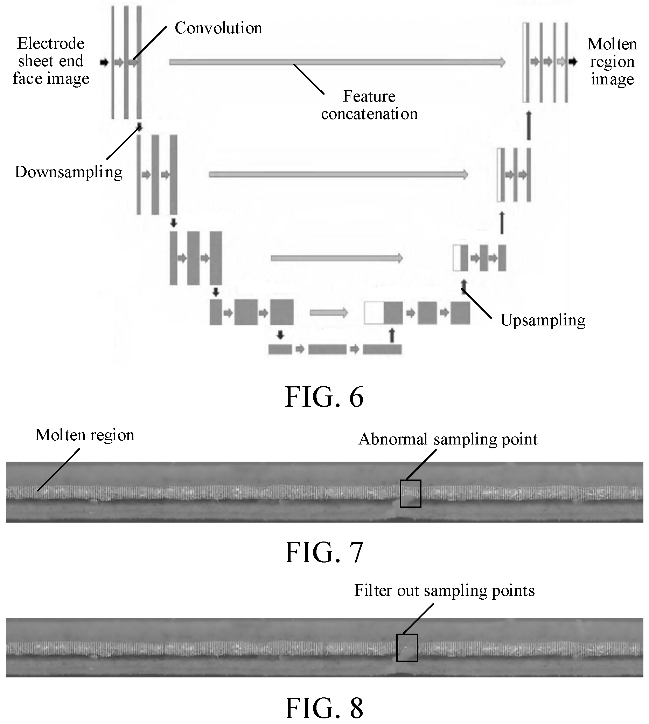

In an example, FIG. 6 is a schematic structural diagram of a U-Net model. In FIG. 6, for the U-Net model, an input image is the electrode sheet end face image, and an output image is the molten region image.

It can be learned from FIG. 6 that, in this embodiment of the present application, the U-Net model uses an encoding/decoding structure combining upsampling and downsampling. The downsampling may increase the robustness against perturbations in an input image, for example, image translation and rotation. In an upsampling process, features are concatenated. In other words, in this embodiment of the present application, a multi-scale fusion manner is used to upsample a downsampling feature map obtained through downsampling. This manner improves the problem of insufficient upsampling information, thereby improving the accuracy of small target recognition, and also improves the effect of target edge segmentation.

It should be noted that, compared with a manner of manually identifying a molten region in the related art, using the U-Net model shown in FIG. 6 to identify a molten region in an electrode sheet end face image may improve the identification speed and accuracy of the molten region. In this embodiment of the present application, using the U-Net model to identify a molten region achieves an increase from a manual identification rate of 90 s/sample to 0.2 s/sample, improving the efficiency by 450 times. The repeatability and reproducibility of measurement are increased from 61.33% that fails to meet the evaluation criteria of a measurement system to less than 1% that meets the evaluation criteria of measurement system analysis (MSA) of the measurement system, and an accurate input source is provided for subsequent search for burr positions and calculation of an average height of molten regions.

In some embodiments, optionally, the performing upsampling and feature concatenation on the convolutional feature map using the upsampling module and the feature concatenation module respectively to obtain a molten region feature corresponding to the molten region in the electrode sheet end face image includes: performing an M^{th} time of upsampling on a convolutional feature map corresponding to an N^{th} time of downsampling using the upsampling module to obtain an upsampling feature map corresponding to the M^{th} time of upsampling; performing an M^{th} time of feature concatenation on the upsampling feature map corresponding to the M^{th} time of upsampling and a convolutional feature map corresponding to an (N-1)^{th} time of downsampling using the feature concatenation module to obtain an initial defect segmentation map; and performing the following operations on the initial defect segmentation map iteratively until M = P to obtain a target defect segmentation map, and determining a feature corresponding to the target defect segmentation map as the molten region feature: upsampling, using the upsampling module, the initial defect segmentation map obtained through the M^{th} time of feature concatenation to obtain an upsampling feature map corresponding to an (M+1)^{th} time of upsampling; performing, using the feature concatenation module, feature concatenation on the upsampling feature map corresponding to the (M+1)^{th} time of upsampling and a feature map generated through an (N-2)^{th} time of downsampling to obtain the target defect segmentation map; and incrementing M by one, decrementing N by one, and updating the initial defect segmentation map to the target defect segmentation map.

In the foregoing embodiment, M + N = P, N is a positive integer greater than or equal to 1, M is a positive integer greater than or equal to 1, P is a positive integer greater than 1, and P-1 is a quantity of times of downsampling of the region identification model. For example, in the U-Net model shown in FIG. 6, if the quantity of times of downsampling is 4, P = 5.

The following describes the foregoing embodiment with reference to FIG. 6.

In FIG. 6, the electrode sheet end face image is input into the U-Net model. The convolutional module performs 3×3 convolution on the electrode sheet end face image, and performs 2×2 downsampling on the convolved image using the downsampling module to obtain the downsampling feature map, thereby completing downsampling once. The downsampling feature map is used as an input image for a next time of downsampling, and the foregoing operations are repeated to obtain the downsampling feature map generated through a plurality of times of downsampling. After the last time of downsampling is completed, the downsampling feature map generated through the last time of downsampling is input to the convolutional module, and a 3×3 convolution operation is performed. The convolved downsampling feature map (i.e., the convolutional feature map) is used as an input image of the upsampling module. The upsampling module performs 2×2 upsampling on the convolutional feature map to obtain the upsampling feature map. Feature concatenation is performed on the upsampling feature map and the convolutional feature map corresponding to the penultimate downsampling, thereby obtaining the initial defect segmentation map. The above operations are then repeatedly performed on the initial defect segmentation map until all upsampling is completed, and a 3×3 convolution is performed on the obtained defect segmentation map, followed immediately by a 1×1 convolution, thereby obtaining the target defect segmentation map. Feature extraction is then performed on the target defect segmentation map to obtain the molten region feature. Finally, image segmentation is performed on the electrode sheet end face image based on the molten region feature to obtain the background region and the molten region, and the electrode sheet end face image is binarized to obtain the molten region image.

As can be learned from the above content, the electrode sheet end face image is used as the input image of the U-Net model. The U-Net model performs downsampling on the electrode sheet end face image four times to reduce the image resolution, thereby sequentially obtaining four intermediate feature map layers, namely, layer1, layer2, layer3, and layer4. The intermediate feature map layer4 undergoes convolution and upsampling, and is then concatenated with the convolved intermediate feature map layer3. The above operations are repeated until the last time of upsampling is completed. After a 1×1 convolution is performed on the feature map obtained from the last time of upsampling, a low-resolution defect segmentation image may be obtained. By analogy, a molten region image having the same resolution as the original electrode sheet end face image is finally obtained.

It should be noted that through a multi-scale fusion approach to upsample the downsampling feature map, the problem of insufficient upsampling information is mitigated, the accuracy of small target identification is improved, the effect of target edge segmentation is improved, and the accuracy of molten region identification is improved, thereby providing a basis for the accurate identification of burr defects.

In some embodiments of the present application, optionally, the identifying burrs in the molten region based on a molten region height value corresponding to the molten region in the molten region image and a preset burr height threshold includes: sampling the molten region in the molten region image to obtain a plurality of sampling points; and identifying burrs in the molten region based on molten region height values corresponding to the sampling points and the preset burr height threshold.

In an example, the terminal device may sample the molten region in the molten region image shown in FIG. 5 in a transverse direction, thereby obtaining a plurality of sampling points in a transverse region. The height value of the white region corresponding to each sampling point is the molten region height value corresponding to each sampling point.

The burrs in the molten region are identified by comparing the molten region height value of the molten region with the preset burr height threshold, thereby avoiding the problem of low efficiency and accuracy of burr annotation caused by manual burr annotation and improving the accuracy and detection efficiency of burr detection.

In some embodiments of the present application, optionally, the sampling the molten region in the molten region image to obtain a plurality of sampling points includes: performing connected component processing on the molten region image to obtain a target molten region image; and sampling the molten region in the target molten region image in a first direction to obtain the plurality of sampling points.

In the foregoing embodiment, the first direction is used to represent an extension direction of the molten region on the electrode sheet end face. In other words, the first direction is the transverse direction of the molten region. For example, in FIG. 5, the first direction is a horizontal direction. In this embodiment of the present application, the molten region is sampled in the horizontal direction to obtain a plurality of sampling points. The sampling frequency of the plurality of sampling points is set by a tester according to an actual requirement.

In addition, in the foregoing embodiment, the connected component is a connected region formed by adjacent pixels having the same pixel value in a binary image. The adjacent pixels may be pixels that are adjacent in the vertical, horizontal, or diagonal direction in the binary image. In this embodiment of the present application, a connected component algorithm in the related art may be used to perform maximum connected component processing on the molten region image.

It should be noted that, in this embodiment of the present application, the connected component processing is performed on the molten region image, so that the consistency of image regions in the molten region image is ensured, and the risk of discontinuity within the molten region in the molten region image is reduced during burr defect identification, thereby improving the accuracy of burr defect detection. In addition, in this embodiment of the present application, multi-point sampling in a transverse direction of the molten region reduces the randomness of burr defect detection while lowering the risk of missed burr detection based on ensuring a reasonable burr detection time.

In some embodiments of the present application, optionally, the identifying burrs in the molten region based on molten region height values corresponding to the sampling points and the preset burr height threshold includes: obtaining molten region height values corresponding to the sampling points in a second direction to obtain the molten region height values of the sampling points; comparing the molten region height values of the plurality of sampling points to obtain a maximum height value; and when the maximum height value is greater than the preset burr height threshold, determining that a burr is present in the molten region.

In the foregoing embodiment, the second direction and the first direction are perpendicular to each other. For example, in FIG. 5, the second direction is a vertical direction of the molten region. The molten region height value of each sampling point is the height value of each sampling point in the second direction. For example, in the sampled molten region image shown in FIG. 7, a white line within the molten region represents one sampling point, and correspondingly, the length of each white line is the molten region height value of each sampling point.

It should be noted that, in this embodiment of the present application, the maximum height value of the molten region height values is compared with the preset burr height threshold to determine whether a burr is present in the molten region, thereby improving the accuracy of burr defect detection. In addition, only the maximum height value is compared with the preset burr height threshold, making it unnecessary to compare the molten region height values of all sampling points with the preset burr height threshold, so that the number of comparisons is reduced to improve comparison efficiency, thereby improving the efficiency of burr detection.

In some embodiments of the present application, optionally, after determining that a burr is present in the molten region, the terminal device compares the molten region height values corresponding to the sampling points with the preset burr height threshold to obtain comparison results, determines a target sampling point from the plurality of sampling points based on the comparison results, and determines that a position of the target sampling point in the molten region is a position of the burr in the molten region.

In the foregoing embodiment, the target sampling point is a sampling point at which the molten region height value is greater than the preset burr height threshold, i.e., the position of the target sampling point is the position at which the burr is located. In this embodiment of the present application, when it is determined that a burr defect is present in the molten region, the specific position of the burr in the molten region is further detected.

It should be noted that, after it is detected that a burr defect is present in the molten region, the specific position of the burr in the molten region is further detected, so that the efficiency and accuracy of burr detection are improved. Furthermore, as can be seen from the above, the solution provided in this embodiment of the present application identifies whether a burr defect is present in the molten region, and further determines a specific defect position when the burr defect is identified, to facilitate subsequent analysis of the cause of the burr defect, so that laser die cutting equipment or the manufacturing process of the electrode sheet is improved to improve the production quality of the electrode sheet, thereby improving the production quality of the battery.

In some embodiments of the present application, optionally, after the comparing the molten region height values of the plurality of sampling points to obtain a maximum height value, when the target sampling point does not exist in the plurality of sampling points, the terminal device calculates an average value of the molten region height values of the plurality of sampling points to obtain an average height value of the molten region; and determines, based on the average height value of the molten region and a preset molten region height range, whether quality of the battery electrode sheet meets a target requirement.

In an example, in this embodiment of the present application, the molten region height value of each sampling point may be calculated, and the molten region height value of each sampling point may be compared with the preset burr height threshold. When it is detected that the molten region height values of all sampling points are less than the preset burr height threshold, it is determined that no burr defect is present in the molten region. In this case, the terminal device may calculate the average height value of the molten region using a box-plot statistics method. If the average height value falls within the preset molten region height range, it is determined that the battery electrode sheet meets the requirement (i.e., the target requirement) for electrode sheet production. If the average height value falls outside the preset molten region height range, it is determined that the battery electrode sheet does not meet the requirement for electrode sheet production, and during actual application, the battery electrode sheet may be discarded.

It should be noted that the foregoing preset molten region height range is a height range of the molten region in a qualified battery electrode sheet. The preset molten region height range is set by a tester based on actual experience, or determined by the terminal device through statistical analysis of historical molten region height values of battery electrode sheets.

In addition, it should be further noted that the absence of burr defects in the molten region, a product compliance inspection is further performed on the molten region to improve the quality of the battery electrode sheet, thereby improving the production quality of the battery.

In some embodiments of the present application, optionally, after the obtaining molten region height values corresponding to the sampling points in a second direction to obtain the molten region height values of the sampling points, the terminal device further statistically analyzes the molten region height values corresponding to the plurality of sampling points, and determines an abnormal height range corresponding to abnormal sampling points; and then identifies the abnormal sampling points from the plurality of sampling points based on the abnormal height range, and filters out the abnormal sampling points from the plurality of sampling points to obtain a plurality of filtered sampling points.

In the foregoing embodiment, the molten region height value of the abnormal sampling point is within the abnormal height range, and the abnormal sampling point is a sampling point whose molten region height value is much less than the average value of the molten region height values. For example, the abnormal height range is 0 to h. h is determined by the product of a proportion coefficient and the average value of the molten region height values. The proportion coefficient is a positive number greater than 0 and less than 1. The proportion coefficient is set by a tester based on actual experience.

In an example, in the sampled molten region image shown in FIG. 7, if the molten region height values of some sampling points are much less than the average value of the molten region height values, these sampling points are abnormal sampling points (for example, these sampling points within the region marked by the black box in FIG. 7). To avoid the impact of abnormal sampling points on burr defect identification, in this embodiment of the present application, when it is detected that abnormal sampling points exist in the molten region image, the abnormal sampling points are filtered out from the molten region image, thereby obtaining the molten region image with the abnormal sampling points filtered out shown in FIG. 8. The terminal device then further detects the molten region image with the abnormal sampling points filtered out, to identify burrs in the molten region.

It should be noted that the abnormal sampling points in the molten region image are identified and filtered out to avoid the impact of the abnormal sampling points on burr detection, thereby improving the accuracy of burr detection.

Based on the foregoing content, the solution provided in the this embodiment of the present application uses a neural network learning model to segment a molten region image from an electrode sheet end face image, and detects a molten region height value of the molten region in the molten region image to determine whether a burr is present in the molten region. In addition, this embodiment of the present application further detects whether the battery electrode sheet is compliant based on the molten region height value of the molten region in the molten region image, thereby improving the quality of battery products, improving the safety of battery products, and reducing the production costs of batteries.

The solution provided in this embodiment of the present application identifies a molten region based on U-Net. This manner reduces labor consumption for burr detection, enables stable reproducibility of burr detection, reduces the risk of cell puncturing, improves the safety of battery products, and reduces production costs.

In addition, the solution provided in this embodiment of the present application performs statistical analysis on the molten region height values of sampling points in the molten region image, so that it is detected whether a burr defect is present in the molten region, and when it is detected that a burr defect is present in the molten region, the position of the burr is determined, thereby improving the efficiency and accuracy of burr detection and improving the stability and reproducibility of burr detection.

It should be understood that although the various steps in the flowcharts in the embodiments described above are sequentially displayed as indicated by the arrows, these steps are not necessarily performed in the order indicated by the arrows. Unless as explicitly stated herein, the execution of these steps is not strictly limited, and may be performed in other sequences. In addition, at least some steps in the above flowcharts in the embodiments described above may include a plurality of steps or a plurality of stages, and these steps or stages are not necessarily performed at the same moment, but may be performed at different moments. The steps or stages are not necessarily performed sequentially, but may be performed by turn or alternately with other steps or at least part of steps or stages in other steps.

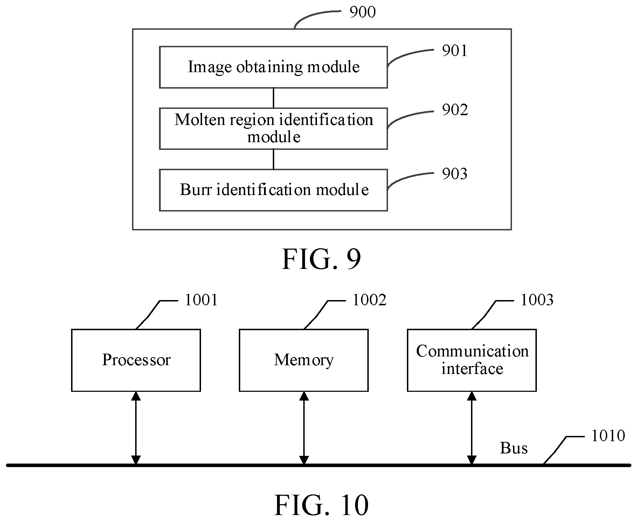

In an embodiment, as shown in FIG. 9, an apparatus for detecting burrs on an electrode sheet is provided. The apparatus 900 includes an image obtaining module 901, a molten region identification module 902, and a burr identification module 903.

The image obtaining module 901 is configured to obtain an electrode sheet end face image after a battery electrode sheet is slit.

The molten region identification module 902 is configured to segment a molten region from the electrode sheet end face image to obtain a molten region image.

The burr identification module 903 is configured to identify burrs in the molten region based on a molten region height value corresponding to the molten region in the molten region image and a preset burr height threshold.

In an example, the image obtaining module 901 is specifically configured to: obtain an initial electrode sheet end face image including at least an electrode sheet end face; and crop the initial electrode sheet end face image based on a position and/or a proportion of the electrode sheet end face in the initial electrode sheet end face image to obtain the electrode sheet end face image.

In an example, the molten region identification module 902 is specifically configured to: identify the molten region from the electrode sheet end face image using a region identification model; and segment the molten region from the electrode sheet end face image to obtain the molten region image, where the molten region image is a binary image, and the binary image includes the molten region and a background region.

In an example, the burr identification module 903 includes a sampling module and a first identification module. The sampling module is configured to sample the molten region in the molten region image to obtain a plurality of sampling points; and the first identification module is configured to identify burrs in the molten region based on molten region height values corresponding to the sampling points and the preset burr height threshold.

In an example, the sampling module is specifically configured to: perform connected component processing on the molten region image to obtain a target molten region image; and sample the molten region in the target molten region image in a first direction to obtain the plurality of sampling points, where the first direction is used for representing an extension direction of the molten region in an electrode sheet end face.

In an example, the first identification module is specifically configured to: obtain molten region height values corresponding to the sampling points in a second direction to obtain the molten region height values of the sampling points, where the second direction and the first direction are perpendicular to each other; compare the molten region height values of the plurality of sampling points to obtain a maximum height value; and when the maximum height value is greater than the preset burr height threshold, determine that a burr is present in the molten region.

In an example, the apparatus for detecting burrs on an electrode sheet further includes: a burr position detection module, configured to: after it is determined that a burr is present in the molten region, compare the molten region height values corresponding to the sampling points with the preset burr height threshold to obtain comparison results; determine a target sampling point from the plurality of sampling points based on the comparison results, where the target sampling point is a sampling point whose molten region height value is greater than the preset burr height threshold; and determine that a position of the target sampling point in the molten region is a position of the burr in the molten region.

In an example, the apparatus for detecting burrs on an electrode sheet further includes: an abnormal data filtering module, configured to: after the molten region height values corresponding to the sampling points in the second direction are obtained to obtain the molten region height values of the sampling points, statistically analyze the molten region height values corresponding to the plurality of sampling points, and determine an abnormal height range corresponding to abnormal sampling points; identify the abnormal sampling points from the plurality of sampling points based on the abnormal height range, where molten region height values of the abnormal sampling points are within the abnormal height range; and filter out the abnormal sampling points from the plurality of sampling points to obtain a plurality of filtered sampling points.

In an example, the apparatus for detecting burrs on an electrode sheet further includes: a compliance detection module, configured to: after the molten region height values of the plurality of sampling points are compared to obtain the maximum height value, when the target sampling point does not exist in the plurality of sampling points, calculate an average value of the molten region height values of the plurality of sampling points to obtain an average height value of the molten region; and determine, based on the average height value of the molten region and a preset molten region height range, whether quality of the battery electrode sheet meets a target requirement.

In an example, the region identification model includes at least a U-Net model.

In an embodiment, the present application further provides an electronic device. The electronic device includes a processor and a memory having computer program instructions stored therein. The processor, when executing the computer program instructions, implements the foregoing method for detecting burrs on an electrode sheet.

FIG. 10 is a schematic diagram of a hardware structure of an electronic device according to an embodiment of the present application.

The electronic device may include a processor 1001 and a memory 1002 having computer program instructions stored therein.

Specifically, the processor 1001 may be a central processing unit (CPU), an application specific integrated circuit (ASIC), or one or more integrated circuits that may be configured to implement the embodiments of the present application.

The memory 1002 may include a mass storage device configured to store data or instructions. By way of example and not limitation, the memory 1002 may include a hard disk drive (HDD), a floppy disk drive, a flash memory, an optical disc, a magneto-optical disk, a magnetic tape, or a universal serial bus (USB) drive, or a combination of two or more thereof. When appropriate, the memory 1002 may include a removable or non-removable (or fixed) medium. When appropriate, the memory 1002 may be inside or outside an integrated gateway disaster recovery device. In a specific embodiment, the memory 1002 is a non-volatile solid-state memory.

The memory may include read-only memories (ROM), random access memories (RAM), magnetic disk storage media devices, optical storage media devices, flash memory devices, and electrical, optical, or other physical/tangible memory storage devices. Therefore, generally, the memory includes one or more tangible (non-transitory) computer-readable storage media (e.g., memory devices) encoded with software including computer-executable instructions, and when the software is executed (e.g., by one or more processors), the software is operable to perform the operations described with reference to the method according to an aspect of the present disclosure.

The processor 1001 reads and executes computer program instructions stored in the memory 1002 to implement any method for detecting burrs on an electrode sheet in the above embodiments.

In an example, the electronic device may further include a communication interface 1003 and a bus 1010. As shown in FIG. 10, the processor 1001, the memory 1002, and the communication interface 1003 are connected and implement communication with each other through the bus 1010.

The communication interface 1003 is mainly configured to implement communication between the modules, apparatuses, units, and/or devices in the embodiments of the present application.

The bus 1010 includes hardware, software, or both, coupling components of the electronic device to each other. By way of example and not limitation, the bus may include an Accelerated Graphics Port (AGP) or other graphics bus, an Enhanced Industry Standard Architecture (EISA) bus, a Front Side Bus (FSB), a HyperTransport (HT) interconnect, an Industry Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local (VLB) bus, or other suitable bus, or a combination of two or more of these. When appropriate, the bus 1010 may include one or more buses. Although a specific bus is described and shown in the embodiments of the present application, the present application contemplates any suitable bus or interconnect.

In an embodiment, the present application further provides a readable storage medium. The readable storage medium having computer program instructions stored therein. The computer program instructions, when executed by a processor, implement the foregoing method for detecting burrs on an electrode sheet.

It is to be understood that the present application is not limited to the specific configuration and processing described above and shown in the drawings. For brevity, a detailed description of known methods is omitted herein. In the foregoing embodiments, several specific steps are described and shown as examples. However, the method process of the present application is not limited to the specific steps described and shown, and those skilled in the art can make various changes, modifications, and additions, or change the order between steps, after appreciating the spirit of the present application.

The functional blocks shown in the foregoing structural block diagrams may be implemented as hardware, software, firmware, or a combination thereof. When implemented in a hardware manner, the functional blocks may be, for example, an electronic circuit, an application specific integrated circuit (ASIC), proper firmware, a plug-in, or a functional card. When implemented in a software manner, an element of the present application is a program or a code segment used for executing a required task. The program or code segment may be stored in a machine-readable medium, or transmitted on a transmission medium or a communication link by using a data signal carried in a carrier. The "machine-readable medium" may include any medium that can store or transmit information. Examples of the machine-readable medium include an electronic circuit, a semiconductor memory device, a ROM, a flash memory, an erasable ROM (EROM), a floppy disk, a CD-ROM, an optical disc, a hard disk, a fiber optic medium, a radio frequency (RF) link, and the like. The code segment may be downloaded by using a computer network, for example, the Internet or an intranet.

It should be further noted that the exemplary embodiments mentioned in the present application describe methods or systems based on a series of steps or apparatuses. However, the present application is not limited to the order of the above steps. In other words, the steps may be performed in the order mentioned in the embodiments, or in a different order from the embodiments, or several steps may be performed simultaneously.

The various aspects of the present application are described above with reference to the flowcharts and/or block diagrams of the method, the apparatus, the device, and the computer program product according to embodiments of the present application. It should be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special-purpose computer, or other programmable data processing apparatus, to generate a machine, such that these instructions, which are executed via the processor of the computer or other programmable data processing apparatus, enable the implementation of implementing the functions/acts specified in one or more blocks of the flowcharts and/or block diagrams. Such a processor may be, but not limited to, a general-purpose processor, a special-purpose processor, an application-specific processor or a field-programmable logic circuit. It should be further noted that, each box in a block diagram and/or a flowchart and a combination of boxes in the block diagram and/or the flowchart may be implemented by using dedicated hardware configured to perform a specified function or action, or may be implemented by using a combination of dedicated hardware and computer instructions.

In summary, it should be noted that the foregoing embodiments are for description of the technical solutions of the present application only rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without making the essence of corresponding technical solutions depart from the scope of the technical solutions of the embodiments of the present application. All such modifications and equivalent replacements shall fall within the scope of claims and specification of the present application. Especially, as long as there is no structural conflict, the various technical features mentioned in each embodiment can be combined in any way. The present application is not limited to the specific embodiments disclosed herein, but includes all technical solutions that fall within the scope of the claims.

## Claims

1. A method for detecting burrs on an electrode sheet, comprising:
obtaining an electrode sheet end face image after a battery electrode sheet is slit;
segmenting a molten region from the electrode sheet end face image to obtain a molten region image; and
identifying burrs in the molten region based on a molten region height value corresponding to the molten region in the molten region image and a preset burr height threshold.

2. The method according to claim 1, wherein the obtaining an electrode sheet end face image after a battery electrode sheet is slit comprises:
obtaining an initial electrode sheet end face image comprising at least an electrode sheet end face; and
cropping the initial electrode sheet end face image based on a position and/or a proportion of the electrode sheet end face in the initial electrode sheet end face image to obtain the electrode sheet end face image.

3. The method according to claim 1, wherein the segmenting a molten region from the electrode sheet end face image to obtain a molten region image comprises:
identifying the molten region from the electrode sheet end face image using a region identification model; and
segmenting the molten region from the electrode sheet end face image to obtain the molten region image, wherein the molten region image is a binary image, and the binary image comprises the molten region and a background region.

4. The method according to claim 3, wherein the identifying burrs in the molten region based on a molten region height value corresponding to the molten region in the molten region image and a preset burr height threshold comprises:
sampling the molten region in the molten region image to obtain a plurality of sampling points; and
identifying burrs in the molten region based on molten region height values corresponding to the sampling points and the preset burr height threshold.

5. The method according to claim 4, wherein the sampling the molten region in the molten region image to obtain a plurality of sampling points comprises:
performing connected component processing on the molten region image to obtain a target molten region image; and
sampling the molten region in the target molten region image in a first direction to obtain the plurality of sampling points, wherein the first direction is used for representing an extension direction of the molten region in an electrode sheet end face.

6. The method according to claim 5, wherein the identifying burrs in the molten region based on molten region height values corresponding to the sampling points and the preset burr height threshold comprises:
obtaining molten region height values corresponding to the sampling points in a second direction to obtain the molten region height values of the sampling points, wherein the second direction and the first direction are perpendicular to each other;
comparing the molten region height values of the plurality of sampling points to obtain a maximum height value; and
when the maximum height value is greater than the preset burr height threshold, determining that a burr is present in the molten region.

7. The method according to claim 6, wherein after the determining that a burr is present in the molten region, the method further comprises:
comparing the molten region height values corresponding to the sampling points with the preset burr height threshold to obtain comparison results;
determining a target sampling point from the plurality of sampling points based on the comparison results, wherein the target sampling point is a sampling point whose molten region height value is greater than the preset burr height threshold; and
determining that a position of the target sampling point in the molten region is a position of the burr in the molten region.

8. The method according to claim 7, wherein after the comparing the molten region height values of the plurality of sampling points to obtain a maximum height value, the method further comprises:
when the target sampling point does not exist in the plurality of sampling points, calculating an average value of the molten region height values of the plurality of sampling points to obtain an average height value of the molten region; and
determining, based on the average height value of the molten region and a preset molten region height range, whether quality of the battery electrode sheet meets a target requirement.

9. The method according to claim 6, wherein after the obtaining molten region height values corresponding to the sampling points in a second direction to obtain the molten region height values of the sampling points, the method further comprises:
statistically analyzing the molten region height values corresponding to the plurality of sampling points, and determining an abnormal height range corresponding to abnormal sampling points;
identifying the abnormal sampling points from the plurality of sampling points based on the abnormal height range, wherein molten region height values of the abnormal sampling points are within the abnormal height range; and
filtering out the abnormal sampling points from the plurality of sampling points to obtain a plurality of filtered sampling points.

10. The method according to claim 3, wherein the region identification model is a neural network model for identifying the molten region, and the region identification model comprises at least a downsampling module, an upsampling module, a convolutional module, and a feature concatenation module.

11. The method according to claim 10, wherein the segmenting the molten region from the electrode sheet end face image to obtain the molten region image comprises:
downsampling the electrode sheet end face image a plurality of times using the downsampling module to obtain a downsampling feature map generated in each time of downsampling;
performing convolution processing, using the convolutional module, on the downsampling feature map generated in each time of downsampling to obtain a convolutional feature map;
performing upsampling and feature concatenation on the convolutional feature map using the upsampling module and the feature concatenation module respectively to obtain a molten region feature corresponding to the molten region in the electrode sheet end face image;
identifying the molten region and the background region from the electrode sheet end face image based on the molten region feature; and
binarizing the molten region and the background region in the electrode sheet end face image, and segmenting the molten region from the binarized electrode sheet end face image to obtain the molten region image.

12. The method according to claim 11, wherein the performing upsampling and feature concatenation on the convolutional feature map using the upsampling module and the feature concatenation module respectively to obtain a molten region feature corresponding to the molten region in the electrode sheet end face image comprises:
performing an M^{th} time of upsampling on a convolutional feature map corresponding to an N^{th} time of downsampling using the upsampling module to obtain an upsampling feature map corresponding to the M^{th} time of upsampling, wherein M + N = P, N is a positive integer greater than or equal to 1, M is a positive integer greater than or equal to 1, P is a positive integer greater than 1, and P-1 is a quantity of times of downsampling of the region identification model;
performing an M^{th} time of feature concatenation on the upsampling feature map corresponding to the M^{th} time of upsampling and a convolutional feature map corresponding to an (N-1)^{th} time of downsampling using the feature concatenation module to obtain an initial defect segmentation map; and
performing operations on the initial defect segmentation map iteratively until M = P to obtain a target defect segmentation map, and determining a feature corresponding to the target defect segmentation map as the molten region feature.

13. The method according to claim 12, wherein the performing upsampling and feature concatenation on the convolutional feature map using the upsampling module and the feature concatenation module respectively to obtain a molten region feature corresponding to the molten region in the electrode sheet end face image comprises:
upsampling, using the upsampling module, the initial defect segmentation map obtained through the M^{th} time of feature concatenation to obtain an upsampling feature map corresponding to an (M+1)^{th} time of upsampling;
performing, using the feature concatenation module, feature concatenation on the upsampling feature map corresponding to the (M+1)^{th} time of upsampling and a feature map generated through an (N-2)^{th} time of downsampling to obtain the target defect segmentation map; and
incrementing M by one, decrementing N by one, and updating the initial defect segmentation map to the target defect segmentation map.

14. The method according to any one of claims 10 to 13, wherein the region identification model comprises at least a U-Net model.

15. The method according to claim 5, wherein the first direction is a transverse direction of the molten region, and the sampling the molten region in the target molten region image in a first direction to obtain the plurality of sampling points comprises:
sampling the molten region in the transverse direction of the molten region at a preset sampling frequency to obtain the plurality of sampling points.

16. The method according to claim 8, wherein the calculating an average value of the molten region height values of the plurality of sampling points to obtain an average height value of the molten region comprises:
performing box-plot statistics on the molten region height values of the plurality of sampling points to obtain the average height value of the molten region.

17. The method according to claim 8 or 16, wherein the determining, based on the average height value of the molten region and a preset molten region height range, whether quality of the battery electrode sheet meets a target requirement comprises:
if the average height value is within the preset molten region height range, determining that the quality of the battery electrode sheet meets the target requirement; and
if the average height value is outside the preset molten region height range, determining that the quality of the battery electrode sheet does not meet the target requirement.

18. An apparatus for detecting burrs on an electrode sheet, comprising:
an image obtaining module, configured to obtain an electrode sheet end face image after a battery electrode sheet is slit;
a molten region identification module, configured to segment a molten region from the electrode sheet end face image to obtain a molten region image; and
a burr identification module, configured to identify burrs in the molten region based on a molten region height value corresponding to the molten region in the molten region image and a preset burr height threshold.

19. An electronic device, comprising a processor and a memory having computer program instructions stored therein, wherein
the processor, when executing the computer program instructions, implements the method for detecting burrs on an electrode sheet according to any one of claims 1 to 9.

20. A readable storage medium, the readable storage medium having computer program instructions stored therein, wherein the computer program instructions, when executed by a processor, implement the method for detecting burrs on an electrode sheet according to any one of claims 1 to 9.
